# EUROPÄISCHE PATENTANMELDUNG

(11) **EP 3 885 411 A1**
(43) Veröffentlichungstag der Anmeldung: **29.09.2021**
(21) Anmeldenummer: 20166307.7
(22) Anmeldetag: 27.03.2020
(51) Int. Cl.: C09C 1/30

(54) **SILICA MIT MODIFIZIERTER OBERFLÄCHE**

(71) Anmelder: Continental Reifen Deutschland GmbH, 30165 Hannover (DE); Georg-August-Universität Göttingen, 37073 Göttingen (DE)
(72) Erfinder: Davin, Julien - c/o Continental AG, 30419 Hannover (DE); Hojdis, Nils - c/o Continental AG, 30419 Hannover (DE); Recker, Carla - c/o Continental AG, 30419 Hannover (DE); Nitschke, Annika - c/o Georg-August-Universität Göttingen, 37077 Göttingen (DE); Vana, Phillipp - c/o Georg-August-Universität Göttingen, 37077 Göttingen (DE); Herzog, Katharina - c/o Continental AG, 30419 Hannover (DE)
(74) Vertreter: Continental Corporation

(57) **Zusammenfassung**

Die vorliegende Erfindung betrifft ein Verfahren zur Herstellung Polymerfunktionalisierter Füllstoffpartikel, wobei die Füllstoffpartikel Silica umfassen oder aus Silica bestehen, umfassend die folgenden Verfahrensschritte:
a) Durchführen einer RAFT-Polymerisation, um ein Polymer gekoppelt an ein RAFT-Agenz zu erhalten,
b) Funktionalisieren der Oberfläche der Füllstoffpartikel mit mindestens einem Linkermolekül, das eine kovalente Bindung mit dem RAFT-Agenz ausbilden kann, und
c) Ausbilden einer kovalenten Bindung zwischen dem an der Oberfläche der Füllstoffpartikel gebundenem Linkermolekül und dem in Schritt a) erhaltenen Polymer, um das in Schritt a) erhaltene Polymer über das Linkermolekül an die Oberfläche der Füllstoffpartikel zu koppeln, die Polymer-funktionalisierten Füllstoffpartikel erhältlich durch dieses verfahren, eine Kautschukmischung, umfassend diese Polymer-funktionalisierten Füllstoffpartikel, und einen Reifen, umfassend diese Kautschukmischung.

## Beschreibung

Die vorliegende Erfindung betrifft ein Verfahren zur Herstellung Polymer-funktionalisierter Füllstoffpartikel, die Polymer-funktionalisierten Füllstoffpartikel, erhältlich durch dieses Verfahren, eine Kautschukmischung, umfassend diese Polymer-funktionalisierten Füllstoffpartikel und einen Reifen, umfassend diese Kautschukmischung.

Die physikalischen Eigenschaften von anorganisch-organischen Hybridmaterialien hängen in erheblicher Weise von der Stärke sowie der Struktur und den Eigenschaften der Grenzfläche zwischen den enthaltenen Komponenten ab. Zur Verstärkung der Wechselwirkung zwischen polymerer Phase und Füllstoffphase erfolgt zumeist der Einsatz von Kupplungsreagentien.

Die Silica-Silan-Technologie wird seit den 1990er Jahren in Gummimischungen für Reifen verwendet. Im Vergleich zu mit Ruß gefüllten Gummimischungen weisen die Silica gefüllten Mischungen unter Verwendung von Silanen einen geringeren Rollwiderstand und besseres Nassgriffverhalten bei ähnlichen Abriebeigenschaften auf.

Das bifunktionale Organosilan nimmt dabei die Rolle eines Haftvermittlers zwischen dem Silica und dem Polymer ein, indem es chemische Bindungen zwischen beiden herstellt. Zudem wirkt es als Kompatibilisator zwischen der polaren Silicaoberfläche und der unpolaren Polymermatrix und unterbindet die Füllstoffaggregation oder -flokkulation, wodurch es die Füllstoffdispersion unterstützt.

Das Silan wird üblicherweise in der Grundmischstufe an das Silica gebunden (Silanisierung). Diese chemische Reaktion ist nur unter bestimmten Prozessbedingungen möglich (Zeit,Temperatur), dem sog. Plateaumischen, welches hohe Anforderungen an die Mischprozessführung stellt. Ob das Silan vollständig an die Silicaoberfläche anbindet, ist nicht überprüfbar. Eine gezielte Modifikation der Silicaoberfläche ist damit nur eingeschränkt möglich.

Die aktuelle Silica-Silan-Technologie erzeugt während des Mischvorgangs Emissionen von flüchtigen organischen Substanzen (z.B. Ethanol). Der Silica-Silan-Mischprozess ist energie- und zeitaufwändig im Vergleich zum Rußmischprozess.

Anstatt das Silica in der Grundmischstufe zu silanisieren, werden die Partikeloberflächen bereits vor dem Mischen modifiziert. Dies ermöglicht eine gezielte und kontrollierte Modifikation der Silicaoberfläche. Anstatt mit bifunktionalen Organosilanen wird die Silicaoberfläche mit kurzkettigen Polymeren modifiziert.

Der Vorteil von kurzkettigen Polymeren liegt darin, dass Strukturen gezielt die Silicaoberfläche modifizieren und die Grenzfläche zwischen Polymer und Silica in Kompatibilität und Steifigkeit beeinflussen können.

Diese kurzkettigen Polymere können über verschiedenste Polymerisationsverfahren hergestellt werden.

Um die Verwendung einer Vielzahl von Monomeren unter verschiedenen Reaktionsbedingungen zu ermöglichen und verschiedene Topologien realisieren zu können, wurde eine Methode zur Polymerisation gewählt, mit der diese Anforderungen erfüllt werden können: Die Reversible Additions- Fragmentierungs-Kettentransfer Polymerisation (reversible addition-fragmentation chain transfer polymerisation, RAFT).

Prinzipiell stehen anschließend zwei Synthesewege zur Funktionalisierung der Silicaoberfläche zur Verfügung. Im sog. "Grafting-To" wird zunächst das Polymer in Lösung mittels RAFT erzeugt und anschließend an die Silicaoberfläche addiert. Beim "Grafting-From" wird zuerst ein Kettenwachstumsagenz (RAFT-Agenz) an die Silicaoberfläche gebunden, sodass die Polymerisation dann an der Silicaoberfläche abläuft.

Die physikalischen Eigenschaften der Gummimischung werden dadurch verbessert.

Die WO 2012/069403 A2 offenbart funktionalisierte Füllstoffpartikel, die mit der "Grafting-From" Methode funktionalisiert wurden. Die WO 2012/069403 A2 offenbart ferner, dass die "Grafting-From" Methode prinzipiell der "Grafting-To" Methode überlegen ist, was die Eigenschaften einer Kautschukmischung enthaltend solche Füllstoffpartikel betrifft.

In der Materialentwicklung der Kautschuk- bzw. Gummiindustrie ist es stets die Aufgabe das Eigenschaftsbild der eingesetzten Kautschukmischungen zu verbessern. Hierfür werden die Kautschukmischungen physikalischen Prüfungen unterzogen, um beispielsweise die Härte, den Rebound, die Zug-Dehnungs-Kurve und das dynamisch mechanische Verhalten der Mischungen zu messen. Diese Messungen dienen als sog. Laborindikatoren, um eine Vorhersage hinsichtlich der Leistungsfähigkeit der Mischung insbesondere in der Reifenanwendung zu tätigen. Hier ist es Aufgabe, die Zielkonflikte, wie Rollwiderstand gegen Nassbremsen, auf höherem Niveau zu lösen als dies der Stand der Technik dies vermag.

Es besteht demnach weiterhin ein Bedarf verbesserte Füllstoffpartikel für Kautschukmischungen bereitzustellen, die die technischen Anforderungen an diese Kautschukmischungen verbessern.

Insbesondere war es daher Aufgabe der Erfindung, ein Verfahren zur Herstellung von verbesserten Füllstoffpartikeln bereitzustellen, die in einer Kautschukmischung, insbesondere einem Reifen, eingesetzt werden können und die die Eigenschaften dieses Reifens verbessern. Insbesondere soll die gezielte Einstellbarkeit von Steifigkeit und Rückprallelastizität (Rebound) verbessert werden.

Diese Aufgabe wird überraschenderweise durch ein Verfahren zur Herstellung Polymer-funktionalisierter Füllstoffpartikel gemäß Anspruch 1 gelöst, insbesondere durch ein Verfahren zur Herstellung Polymer-funktionalisierter Füllstoffpartikel, wobei die Füllstoffpartikel Silica umfassen oder aus Silica bestehen, umfassend die folgenden Verfahrensschritte:
a) Durchführen einer RAFT-Polymerisation, um ein Polymer gekoppelt an ein RAFT-Agenz zu erhalten,
b) Funktionalisieren der Oberfläche der Füllstoffpartikel mit mindestens einem Linkermolekül, das eine kovalente Bindung mit dem Polymer bzw. dem RAFT-Agenz ausbilden kann, und
c) Ausbilden einer kovalenten Bindung zwischen dem an der Oberfläche der Füllstoffpartikel gebundenem Linkermolekül und dem in Schritt a) erhaltenen Polymer, um das in Schritt a) erhaltene Polymer über das Linkermolekül an die Oberfläche der Füllstoffpartikel zu koppeln.

Es hat sich überraschenderweise gezeigt, dass die Aussage der WO 2012/069403 A2, dass die "Grafting-From" Methode prinzipiell der "Grafting-To" Methode überlegen ist, nicht zutreffend ist. Stattdessen haben die Erfinder gefunden, dass die Natur des RAFT-Agenzes und des verwendeten Linkermoleküls entscheidend ist. Wird ein konkretes RAFT-Agenz in Kombination mit speziellen Linkermolekülen eingesetzt, so können auch mit der "Grafting-To" Methode Polymer-funktionalisierte Füllstoffpartikel bereitgestellt werden, die, wenn sie in Kautschukmischungen, insbesondere zur Reifenherstellung, eingesetzt werden, die Eigenschaften dieser Reifen deutlich verbessern.

Insbesondere der zweistufige Ansatz, also die Kopplung des mittels RAFT-Polymerisation hergestellten Polymers über das RAFT-Agenz und einen zusätzlichen Linker hat den Vorteil, dass die Beladungsdichte der Füllstoffpartikel gezielt durch die Menge des eingesetzen Linkers gesteuert werden kann. Diese Methode erlaubt eine gezielte Anbindung des Polymers über die Endgruppe und führt damit zu einem kontrollierten Aufbau der Grenzschicht zwischen Polymer und Füllstoffoberfläche.

Insbesondere zeigt sich, dass sich im Gegensatz zu der konventionellen Silan-Technologie die Härte und die Rückprallelastizität gezielt und insbesondere unabhängig voneinander einstellen lassen. Insbesondere ist die Rückprallelastizität bei hohen Temperaturen als Indikator für Rollwiderstand deutlich verbessert.

Um die Verwendung einer Vielzahl von Monomeren unter verschiedenen Reaktionsbedingungen zu ermöglichen und verschiedene Topologien realisieren zu können, wurde eine Methode zur Polymerisation gewählt, mit der diese Anforderungen erfüllt werden können: Die Reversible Additions-Fragmentierungs-Kettentransfer-Polymerisation (reversible addition-fragmentation chain transfer polymerisation, RAFT).

Die sogenannte RAFT-Polymerisation ist eine spezielle Form der kontrollierten radikalischen Polymerisation. Es handelt sich um eine eigenständige Methode zur gezielten Synthese von Polymeren mit wohldefinierter molarer Masse bzw. Polymerisationsgrad, geringer Polydispersität sowie bekannter Endfunktionalität. Die Kontrolle der Reaktion wird durch reversible Kettenübertragungsreaktionen erreicht. Dabei addiert eine wachsende Radikalkette an das sogenannte RAFT-Agenz, wobei ein intermediäres Radikal entsteht. Auf Grund der Struktur der RAFT-Agentien hat dieses Intermediat die Möglichkeit, zu verschiedenen Seiten hin zu fragmentieren, wodurch wiederum ein RAFT-Agenz sowie ein zur Propagation zur Verfügung stehendes Radikal zurückgebildet wird (welches jedoch ausdrücklich nicht der originalen Radikalkette entsprechen muss). Auf diese Weise wird die Propagationswahrscheinlichkeit über alle Ketten gleich verteilt. Die durchschnittliche Kettenlänge des gebildeten Polymers ist proportional zur RAFT-Agenz Konzentration sowie zum Reaktionsumsatz. Typische Substanzklassen für RAFT-Agentien sind Dithioester, Dithiocarbamate, Trithiocarbonate und Xanthogenate. Der RAFT Prozess ist dem Fachmann bekannt und wird beispielsweise von J. Chiefari, Y. K. Chong, F. Ercole, J. Krstina, J. Jeffery, T. P. T. Le, R. T. A. Mayadunne, G. F. Meijs, C. L. Moad, G. Moad, E. Rizzardo, S. H. Thang, in Macromolecules 1998, 31(16), 5559-5562 beschrieben.

Der Vorteil der RAFT-Polymerisation im Vergleich zur konventionellen radikalischen Polymerisation und anderen Techniken ist demnach die hohe Toleranz gegenüber funktionellen Gruppen und Reaktionsbedingungen, wie Lösungsmittel und Temperatur. Darüber hinaus sind neben Blockcopolymeren viele weitere Topologien, wie Stern- und Kammpolymere, zugänglich. Damit lässt sich gezielt ein Polymer herstellen, welches an die Silicaoberfläche angebunden werden kann.

Ein geeignetes RAFT-Agenz weist vorzugsweise einen Aufbau gemäß der allgemeinen Formel (I) auf:

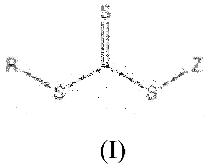

Die Polymerisation führt zu dem Einbau des Polymers zwischen der R-Gruppe und der Trithiocarbonateinheit und führt vorzugsweise zu einem Polymer der Allgemeinen Formel (II).

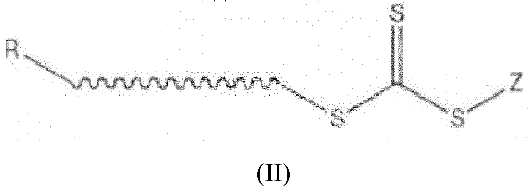

Die endständige verbleibende R-Gruppe bzw. Z-Gruppe des RAFT-Agenzes kann nach der Polymerisation, wenn nötig, chemisch umgewandelt werden. Dies erlaubt, das Polymer so zu funktionalisieren, dass es an verschiedene Oberflächen anbinden kann.

Alternativ kann die Trithiocarbonatgruppe beispielsweise mittels Aminolyse mit Hydrazin in eine freie SH-Gruppe umgewandelt werden, die eine weitere Funktionalisierung ermöglicht oder über die das Polymer an verschiedene Oberflächen binden kann.

In dem Schritt c) wird eine kovalente Bindung zwischen dem RAFT-Agenz und dem auf der Oberfläche der Füllstoffpartikel gebundenem Linkermolekül ausgebildet.

Die Bindung an die Oberfläche der Füllstoffpartikel über das Linkermolekül kann über die R-Gruppe, die Z-Gruppe oder nach Umwandlung der Trithiocarbonatgruppe in eine freie SH-Gruppe über diese freie SH-Gruppe erfolgen.

Sowohl die R- als auch die Z-Gruppe können vorher chemisch modifiziert werden, um die Kopplung zu ermöglichen oder zu erleichtern.

Alternativ kann das Polymer auch über eine funktionelle Gruppe in dem Polymer, wie beispielsweise eine endständige C-C-Doppelbindung, an die Oberfläche der Füllstoffpartikel gekoppelt werden.

Es ist bevorzugt, dass die RAFT-Agenzien und/oder die Polymeren über keine Silangruppe verfügen.

Gemäß der vorliegenden Erfindung werden Benzylpropyltrithiocarbonat (BPTT) und/oder 4-Cyano-4-[(dodecylsulfanylthiocarbonyl)sulfanyl]pentasäure (CDSPA) als bevorzugte RAFT-Agenzien eingesetzt.

Bei BPTT handelt es sich um Verbindungen der folgenden Formel III:

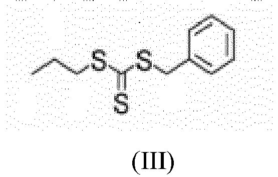

BPTT wird gemäß R. Rotzoll, P. Vana,Journal of Polymer Science Part A: Polymer Chemistry 2008,46(23), 7656-7666 mit der Abwandlung, dass 1-Propanthiol anstelle von Dodecanthiol eingesetzt wird, synthetisiert.

Bei CDSPA handelt es sich um Verbindungen der folgenden Formel IV:

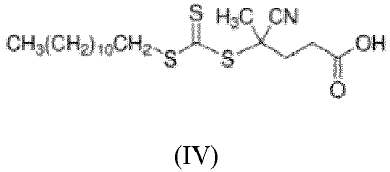

Die freie Carbonsäuregruppe von CDSPA ist vorzugsweise durch eine Schutzgruppe geschützt oder liegt als aktiviertes Derivat vor. Geeignete Schutzgruppen sind dem Fachmann bekannt und umfassen beispielsweise Gruppen, die mit CDSPA Ester oder Amide bilden. Besonders bevorzugt ist die Carboxylgruppe von CDSPA durch Thiazolidin-2-thion aktiviert (siehe Formel VIa).

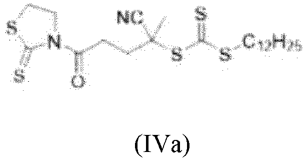

CDSPA ist kommerziell erhältlich. Die aktivierte Form gemäß (IIa) wird gemäß C. Li, J. Han, C. Y. Ryu, B. C. Benicewicz,Macromolecules 2006, 39, 3175-3183 synthetisiert.

Alle weiteren genannten RAFT-Agenzien wurden ebenfalls gemäß R. Rotzoll, P. Vana, Journal of Polymer Science Part A: Polymer Chemistry 2008,46(23), 7656-7666 synthetisiert.

Das erfindungsgemäße Verfahren ist dadurch gekennzeichnet, dass die Füllstoffpartikel Silica umfassen oder aus Silica bestehen.

Silica ist gleichbedeutend mit Kieselsäure bzw. Siliziumdioxid, vorzugsweise in einer amorphen bzw. nicht kristallinen Form.

Vorzugsweise weisen die Füllstoffpartikel eine Partikelgröße von 5 nm bis 100 nm, bevorzugt von 5 nm bis 40 nm, bestimmt durch Transmissions-elektronenmikrokopie (TEM), auf. Die CTAB Oberfläche liegt vorzugsweise zwischen 50 und 300 und besonders bevorzugt zwischen 80 und 200 m²/g.

Da die bevorzugten RAFT-Agenzien über keine Silangruppe verfügen, muss das Polymer über einen zusätzlichen Linker an die Oberfläche der Füllstoffpartikel gekoppelt werden.

Prinzipiell kann das Polymer über das RAFT-Agenz, also die R- und/oder die Z-Gruppe oder über eine funktionelle Gruppe in dem Polymer, an das Linkermolekül gekoppelt werden.

Ein geeigneter Linker weist zum einen eine -Si(OAlk)₃, -SiAlk(OAlk)₂ oder-SiAlk₂(OAlk) mit Alk als divalentem Kohlenstoff mit 1 bis 18 C-Atomen auf und zum anderen eine funktionelle Gruppe, die mit dem RAFT-Agenz, also der R- und/oder der Z-Gruppe oder mit einer funktionellen Gruppe in dem Polymer, reagieren kann. Geeignete funktionelle Gruppen sind (terminale) C-C-Doppelbindungen, OH- oder NH₂-Gruppen.

Das erfindungsgemäße Verfahren ist vorzugsweise dadurch gekennzeichnet, dass das Linkermolekül Dimethylethoxyvinylsilan und/oder 3-Aminopropyldimethylethoxysilan umfasst.

Vorzugsweise wird Dimethylethoxyvinylsilan als Linkermolekül in Kombination mit den RAFT-Agenz Benzylpropyltrithiocarbonat verwendet.

Vorzugsweise wird 3-Aminopropyldimethylethoxysilan als Linkermolekül in Kombination mit dem RAFT-Agenz 4-Cyano-4-[(dodecylsulfanylthiocarbonyl)sulfanyl]pentasäure bzw. mit der aktivierten Form gemäß Formel (IVa) verwendet.

Die Verankerung der Linkermoleküle auf der Oberfläche der Füllstoffpartikel verläuft vorzugsweise über vier Schritte. Im ersten Schritt erfolgt eine Hydrolyse der Silangruppen in Gegenwart von Wasser zum entsprechenden Silanol. Diese Silanole kondensieren im zweiten Reaktionsschritt zusammen und bilden Oligomere aus. Diese Oligomere bilden mit den Hydroxylgruppen der Silicaoberfläche starke Wasserstoffbrückenbindungen aus. Schließlich wird eine kovalente Bindung unter Abspaltung von Wasser mit der Oberfläche des Substrates ausgebildet.

Die Beladung der Füllstoffpartikel kann in beiden Fällen über geeignete Einwaagen gesteuert werden.

In dem Schritt c) wird dann eine kovalente Bindung zwischen dem RAFT-Agenz und dem auf der Oberfläche der Füllstoffpartikel gebundenem Linkermolekül ausgebildet. Dabei reagiert die weitere Funktionalität des Linkermoleküls, vorzugsweise in einer nucleophilen Substitution, vorzugsweise mit dem Carbonyl- bzw- Carboxylkohlenstoff des CDSPA, unter Abspaltung von Wasser oder einer Abgangsgruppe und bildet so eine kovalente Bindung aus.

Wird Benzylpropyltrithiocarbonat als RAFT-Agenz eingesetzt, so ist es bevorzugt, dass das Benzylpropyltrithiocarbonat, das an ein Polymer gekoppelt ist, einer Aminolyse mittels Hydrazin unterzogen wird, bevor es über den Linker an die Oberfläche der Füllstoffpartikel gekoppelt wird. Hier ist dann eine Kopplung über die freie SH-Gruppe sowie über eine eventuell vorhandene endständige Doppelbindung in dem Polymer möglich.

Wird ein Polymer, gebunden an Benzylpropyltrithiocarbonat nach Aminolyse mittels Hydrazin zur Modifikation der Oberfläche der Füllstoffpartikel eingesetzt, so ist die Oberfläche der Füllstoffpartikel vorzugsweise mit Dimethylethoxyvinylsilan funktionalisiert und die Kopplung an die Oberfläche der funktionalisierten Füllstoffppartikel wird vorzugsweise in Gegenwart von 1,1'-Azobis(cyclohexanecarbonitril) durchgeführt.

Wird das Polymer über die R-Gruppe des RAFT-Agenzes und/oder über eine funktionelle Gruppe in dem Polymer über das Linkermolekül an die Oberfläche der Füllstoffpartikel gebunden, so wird die nach der Polymerisation verbleibende Trithiocarbonatgruppe mit der Z-Gruppe vorzugsweise modifiziert.

Das erfindungsgemäße Verfahren ist daher vorzugsweise dadurch gekennzeichnet, dass in einem Schritt d) die Trithiocarbonatgruppe des RAFT-Agenzes in eine Schutzgruppe für den im Polymer enthaltenden Schwefel umgewandelt wird um eine Vulkanisation im ersten Mischungsschritt zu verhindern.

Eine solche Endgruppenmodifikation umfasst vorzugsweise die Bildung eines Thioethers, welcher als Schutzgruppe auch während der Vulkanisation dient, oder eines Thioesters, welcher während der Vulkanisation abgespalten wird und eine Partizipation in der Vulkanisationsreaktion ermöglicht.

Das erfindungsgemäße Verfahren ist vorzugsweise dadurch gekennzeichnet, dass das Polymer einen Styrol-Butadien-Kautschuk bzw. ein Styrol-Butadien-Copolymer umfasst.

Styrol-Butadien-Kautschuk oder Styrol-Butadien-Copolymer ist die Sammelbezeichnung für Copolymere (V) aus Styrol und Butadien deren Makromoleküle überwiegend die Struktureinheiten I und II aufweisen:

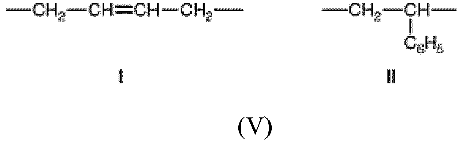

Das erfindungsgemäße Verfahren ist vorzugsweise dadurch gekennzeichnet, dass das Polymer aus einem Styrol-Butadien-Kautschuk mit 10 bis 30 % Styrol und 90 bis 70% Butadien besteht. Dabei addieren sich die prozentualen Anteile von Styrol und Butadien auf 100 %.

Polymere dieser Zusammensetzung haben den Vorteil, dass sie kompatibel sind zu einer üblichen Gummimischung im erfindungsgemäßen Anwendungsbereich, wie z.B. in Autoreifen, wodurch eine gute Mischbarkeit gewährleitet wird.

Durch die Verwendung der RAFT- Polymerisation können Polymere mit sehr definiertem Molekulargewicht erhalten werden.

Das erfindungsgemäße Verfahren ist vorzugsweise dadurch gekennzeichnet, dass das Polymer ein Molekulargewicht von 5000 bis 40000 g/mol, gemessen mittels Gelpermeationschromatographie, aufweist.

Polymere mit diesem Molekulargewicht haben den Vorteil, dass die Polymerketten lang genug sind um mit der Matrix zu verknäulen, jedoch kurz genug, um nicht durch sterische Hinderung bei der Funktionalisierung der Partikel die Beladungsdichte zu verringern.

Durch die Verwendung der RAFT- Polymerisation können Polymere mit sehr definiertem Polydispersitätsindex erhalten werden.

Das erfindungsgemäße Verfahren ist vorzugsweise dadurch gekennzeichnet, dass das Polymer einen Polydispersitätsindex von 1 bis 2, gemessen mittels Gelpermeationschromatographie, aufweist.

Polymere mit diesem Polydispersitätsindex haben den Vorteil, dass alle Polymerketten in etwa dieselbe Kettenlänge und somit das Polymer definierte Eigenschaften hat.

Die vorliegende Erfindung betrifft ferner Polymer-funktionalisierte Füllstoffpartikel erhältlich durch das vorstehend beschriebene Verfahren.

Die vorliegende Erfindung betrifft auch eine Kautschukmischung, die die Polymer-funktionalisierte Füllstoffpartikel, die durch das vorstehend beschriebene das Verfahren erhältlich sind, enthält.

Die Kautschukmischung kann für die Herstellung von Reifen, insbesondere Pkw-Reifen, LKW-Reifen, Zweiradreifen oder Industriereifen, welche bevorzugt als Luftreifen, aber auch als Vollgummireifen ausgeprägt sein können, verwendet werden. Bevorzugt wird die erfindungsgemäße Kautschukmischung als Laufstreifen eingesetzt, aber auch die Verwendung als Kautschukmischung für die inneren Bauteile (body compounds) ist möglich. Des Weiteren kann die Kautschukmischung zur Herstellung von technischen Gummiartikeln, wie beispielsweise Gurte, Riemen, Schläuche, Dichtungen, Luftfederbälgen und Drucktüchern, verwendet werden.

Die Kautschukmischung kann zusätzlich, neben dem bereits aus den Polymermodifizierten Füllstoffpartikeln vorhandenen Kautschuk, zumindest einen weiteren polaren oder unpolaren Kautschuk enthalten.

Der polare oder unpolare Kautschuk ist vorzugsweise ausgewählt aus der Gruppe, bestehend aus Naturkautschuk und/oder natürlichem Polyisopren und/oder synthetischem Polyisopren und/oder Butadien-Kautschuk und/oder Styrolbutadienkautschuk und/oder lösungspolymerisiertem Styrolbutadienkautschuk und/oder emulsionspolymerisiertem Styrolbutadienkautschuk und/oder Flüssigkautschuken und/oder Halobutylkautschuk und/oder Polynorbornen und/oder Isopren-Isobutylen-Copolymer und/oder Ethylen-Propylen-Dien-Kautschuk und/oder Nitrilkautschuk und/oder Chloroprenkautschuk und/oder Acrylat-Kautschuk und/oder Fluorkautschuk und/oder Silikon-Kautschuk und/oder Polysulfidkautschuk und/oder Epichlorhydrinkautschuk und/oder Styrol-Isopren-Butadien-Terpolymer und/oder hydriertem Acrylnitrilbutadienkautschuk und/oder Isopren-Butadien-Copolymer und/oder hydriertem Styrolbutadienkautschuk.

Insbesondere Nitrilkautschuk, hydrierter Acrylnitrilbutadienkautschuk, Chloroprenkautschuk, Butylkautschuk, Halobutylkautschuk oder Ethylen-Propylen-DienKautschuk kommen bei der Herstellung von technischen Gummiartikeln, wie Gurten, Riemen und Schläuche, zum Einsatz.

Die Polymer-funktionalisierten Silicapartikel sind in der Kautschukmischung vorzugsweise in einer Menge von 1 bis 300 phr, bevorzugt 1 bis 250 phr, besonders bevorzugt 1 bis 200 phr, wiederum besonders bevorzugt 1 bis150 phr, wiederum ganz besonders bevorzugt 1 bis 100 phr, enthalten.

Weitere in der Kautschukindustrie bekannte Füllstoffe, wie Aluminiumoxid, Talk, Kaolin, Karbonate, Metalloxide (bspw. Mg-Oxide, Fe-Oxide, Ti-Oxide), Glimmer, Kohlenstofffasern, Tonminerale, modifizierte Schichtsilikate, etc., können ebenfalls eingesetzt werden. Ebenso können Fasern, z. B. aus Aramid oder Nylon, Mikrohohlkugeln und/oder Glasflocken, in der Kautschukmischung enthalten sein.

Weiterhin kann die Kautschukmischung noch weitere Zusatzstoffe enthalen. Weitere Zusatzstoffe beinhaltet im Wesentlichen Weichmacher, Zinkoxid, das Vernetzungssystem (Vernetzer, Schwefelspendern und/oder elementaren Schwefel, Beschleuniger und Verzögerer), Ozonschutzmittel, Alterungsschutzmittel, Mastikationshilfsmittel und weitere Aktivatoren bzw. Verarbeitungshilfsmittel.

Der Mengenanteil der Gesamtmenge an weiteren Zusatzstoffen beträgt 3 bis 150 phr, bevorzugt 3 bis 100 phr und besonders bevorzugt 5 bis 80 phr.

Als Weichmacher werden bevorzugt Mineralöle, wie beispielsweise DAE (Destillated Aromatic Extracts), RAE (Residual Aromatic Extract), TDAE (Treated Destillated Aromatic Extracts), MES (Mild Extracted Solvents) und/oder naphtenische Öle und/oder synthetische Weichmacher und/oder Fettsäuren und/oder ein Fettsäurederivate und/oder Harze und/oder ein Faktisse und/oder Pflanzenöle oder BTL-Öle (Biomass-To-Liquid) und/oder Flüssigpolymere eingesetzt.

Die hier verwendete Angabe phr (parts per hundred parts of rubber by weight) ist die in der Kautschukindustrie übliche Mengenangabe für Mischungsrezepturen. Die Dosierung der Gewichtsteile der einzelnen Substanzen wird stets auf 100 Gewichtsteile der gesamten Masse aller in der Mischung vorhandenen Kautschuke bezogen.

Die vorliegende Erfindung betrifft ferner die Verwendung der nach dem beschriebenen Verfahren erhältlichen Füllstoffpartikel als Füllstoff in einer Kautschukmischung.

Die vorliegende Erfindung betrifft auch die Verwendung einer Kautschukmischung, umfassend die nach dem beschriebenen Verfahren erhältlichen Füllstoffpartikel, zur Herstellung eines Kautschukformkörpers, insbesondere eines Reifens.

Die Erfindung wird in den folgenden nicht beschränkenden Beispielen näher erläutert.

### Beispiele:

Es wurden Kautschukmischungen, umfassend Polymer-funktionalisierte Füllstoffpartikel gemäß der Zusammensetzung von Tabelle 1 hergestellt. Dabei wurde zum einen die "Grafting-From" und zum anderen die "Grafting-To" Methode eingesetzt. Die Werte in Tabelle 1 sind als "phr" angegeben.

Die in der folgenden Tabelle 1 aufgeführten Füllstoffpartikel bzw. Polymer-funktionalisierten Füllstoffpartikel wurden wie folgt hergestellt:

### Ref. Silica (n):

Unmodifiziertes Referenzsilica von Plasma Chem.

Der Partikeldurchmesser beträgt 30-40 nm.

### AN12:

### Unmodifiziertes Referenzsilica, hergestellt nach der Stöber Methode:

Eine Mischung aus Ethanol (395 mL, 6,70 mol), Methanol (530 mL, 13,1 mol), Ammoniak (32 Gew.-%, 29,5 mL, 0,50 mol), Wasser (26,6 mL, 1,50 mol) und Tetraethylorthosilikat (33,2 mL, 0,20 mol) wurde 24 h lang bei Raumtemperatur kräftig gerührt. Die Lösung wurde im Vakuum konzentriert. Die verbleibende Lösung wurde zentrifugiert (9000 U/min, 0 °C, 30 min), die Partikel wurden zweimal mit Methanol gewaschen und im Vakuum bei Raumtemperatur für 12 h getrocknet.

Die Synthese wurde mehrmals wiederholt, bis genügend Material gewonnen wurde. Die Partikel der gesamten Synthese wurden vor dem Gebrauch gemischt.

Der Partikeldurchmesser betrug 30-40 nm.

### AN 15:

| | |
|---|---|
| Modifiziertes AN 12 Silica: | Copolymer mit 22,2 % Styrol und 77,8 % |
| | Butadien (1,2 16,5%; 1,4 83,5%) |
| | Mn: 17600 g/mol |
| | PDI: 1,66 |
| | RAFT-Agenz: |
| | CDSPA mit Linker 3-Aminopropyldimethylethoxysilan |

Die Herstellung erfolgte gemäß dem folgenden Verfahren:

### Polymer (AN13):

Poly(styrol-co-butadien) wurde durch RAFT-Polymerisation mit aktivierter 4 Cyano-4-[(dodecylsulfanylthiocarbonyl)sulfanyl]pentansäure (CDSPA gemäß Formel (IVa)) als RAFT-Agnez synthetisiert. Das Polymer wurde 24 Stunden lang bei Raumtemperatur im Vakuum getrocknet.

### Vorfunktionalisierte Silicapartikel (SiNPs) (AN14):

SiNPs (AN12, 17,0 g) wurden in Toluol (500 mL) unter Ultraschall für 30 Minuten dispergiert. 3-Aminopropyldimethylethoxysilan (APDEMS, 2,0 g, 14,4 mmol) wurde zugegeben, die Lösung wurde 30 min lang mit Argon gespült und 36 h lang kräftig bei 90 °C gerührt. Die Lösung wurde zentrifugiert (9000 U/min, 0 °C, 1 h), die Partikel wurden zweimal mit Toluol gewaschen und im Vakuum bei 40 °C für 12 h getrocknet.

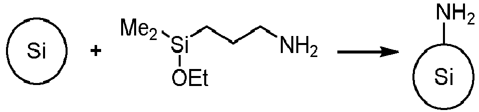

### Grafting-to (AN15):

Die vorfunktionalisierten SiNPs (AN14, 19 g) und SBR (AN13, 40 g) wurden in Toluol (500 mL) unter Ultraschall für 30 min gelöst, die Lösung wurde mit Argon für 30 min gespült und bei Raumtemperatur für 3 d kräftig gerührt Die Lösung wurde zentrifugiert (9000 U/min, 0 °C, 1 h) und die Partikel mehrmals mit Toluol gewaschen, bis der Überstand keine Ausfällung in Aceton zeigte.

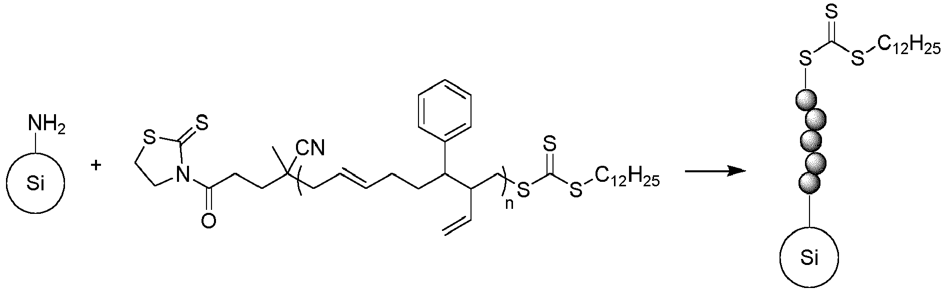

### AN 15. Endgruppenfunktionalisierung:

Die Partikel wurden in Toluol (300 ml) gelöst, Hydrazin (2,4 mL) zugegeben und die Lösung bei Raumtemperatur für 2 d stark gerührt. Butylacrylat (1 ml, 7,0 mmol) wurde zugegeben, nach 3 d wurde die Lösung zentrifugiert (9000 U/min, 0 °C, 1 h), die Partikel wurden zweimal mit Toluol gewaschen und im Vakuum bei 40 °C für 12 h getrocknet.

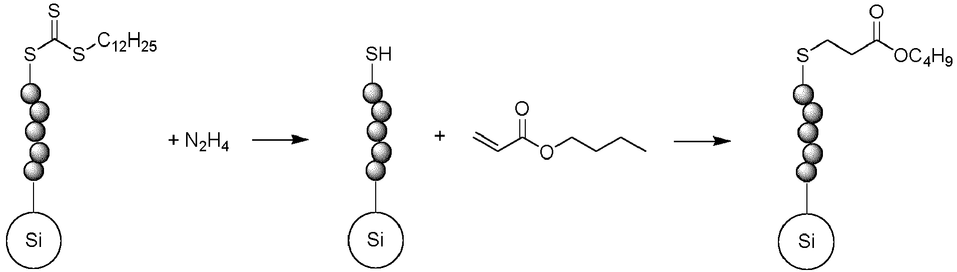

### AN18:

| | |
|---|---|
| AN 18: modifiziertes AN 12 Silica: | Copolymer mit 22,6 % Styrol und 77,4 % Butadien |
| | (1,2 16,5%; 1,4 83,5%) |
| | Mn: 14900 g/mol |
| | PDI: 1,68 |
| | RAFT-Agenz: BPTT mit Linker DMEVS |

### Vorfunktionalisiertes SINP (AN16):

SiNPs (AN12, 17,0 g) wurden in Toluol (500 mL) unter Ultraschall für 30 Minuten dispergiert. Dimethylethoxyvinylsilan (DMEVS, 3,0 mL, 18,2 mmol) wurde zugegeben, die Lösung wurde 30 min lang mit Argon gespült und 3 d lang bei 80 °C kräftig gerührt. Die Lösung wurde zentrifugiert (9000 U/min, 0 °C, 1 h), die Partikel zweimal mit Toluol gewaschen und im Vakuum bei 40 °C für 12 h getrocknet.

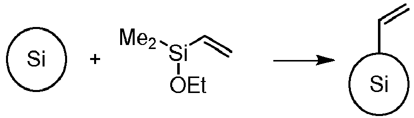

### Polymer (AN17):

Poly(styrol-co-butadien) (AN17) wurde durch RAFT-Polymerisation mit Benzylpropyltrithiocarbonat (BPTT) als RAFT-Agenz und anschließender Aminolyse mit Hydrazin synthetisiert. Das Polymer wurde 24 Stunden lang im Vakuum bei 40 °C getrocknet.

### Grafting-to (AN18):

Die vorfunktionalisierten SiNPs (AN16, 19 g) und die endgruppenmodifizierten SBR (AN17, 40 g) wurden in Toluol (500 mL) unter Ultraschall für 30 min dispergiert. 1,1'-Azobis(cyclohexancarbonitril) (ACCN, 0,7 g, 2.8 mmol) wurde zugesetzt, die Lösung mit Argon für 30 min gespült und für 2 d in ein Ölbad bei 80 °C gestellt. Die Lösung wurde zentrifugiert (9000 U/min, 0 °C, 1 h) und die Partikel mehrmals mit Toluol gewaschen, bis der Überstand keine Ausfällung in Aceton zeigte.

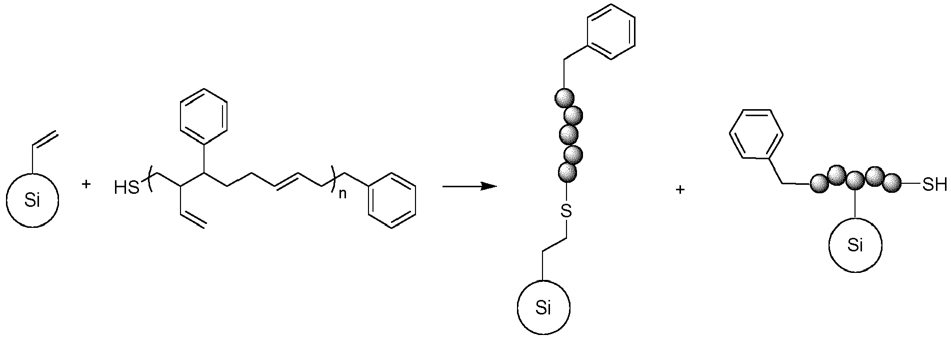

### AN18: Endgruppenfunktionalisierung:

Die Partikel wurden in Toluol (300 ml) gelöst, Hydrazin (1,0 mL) zugegeben und die Lösung bei Raumtemperatur für 24 h kräftig gerührt. Butylacrylat (1 ml, 7,0 mmol) wurde zugegeben, nach 24 h wurde die Lösung zentrifugiert (9000 U/min, 0 °C, 1 h), die Partikel wurden zweimal mit Toluol gewaschen und im Vakuum bei 40 °C für 12 h getrocknet.

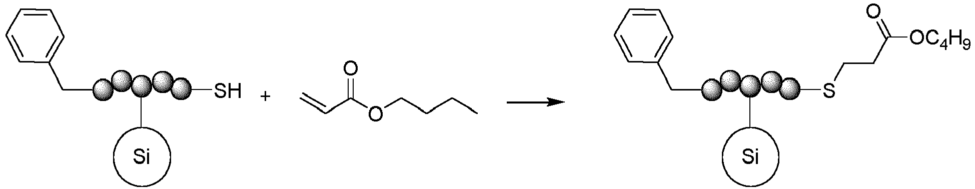

### AN 24:

| | |
|---|---|
| AN 24: modifiziertes Plasma Chem Silica (n): | Copolymer mit 23,4 % Styrol und 76,6 |
| | % Butadien (1,2 16,5.%; 1,4 83,5%) |
| | Mn: 23000 g/mol |
| | PDI: 1,8 |
| | -Agenz: PTPT (Propoyl((trimethoxysilyl)-ethylphenylmethyl)trithiocarbonat) |

### Vorfunktionalisierte SINP

SiNPs (PlasmaChem, 18,0 g) wurden in DME (300 mL) unter Ultraschall für 30 Minuten dispergiert. Propyl((trimethoxysilyl)ethylphenylmethyl)trithiocarbonat (PTPT, 1,0 g) und Maleinsäureanhydrid (0,3 mL) wurden hinzugefügt. Die Lösung wurde bei Raumtemperatur für 3 d kräftig gerührt. Die Lösung wurde zentrifugiert (9000 U/min, 0 °C, 1 h). Die Partikel (SiPTPT) wurden dreimal mit Methanol gewaschen.

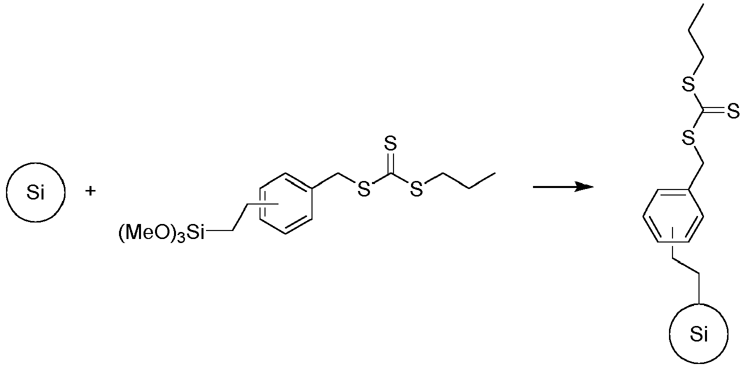

### Polymerisation:

Poly(styrol-co-butadien) wurde durch RAFT-Polymerisation (87°C, 24 h) mit SiPTPTT als RAFT-Agenz synthetisiert. Die Lösung wurde zentrifugiert (9000 U/min, 0 °C, 1 h) und die Partikel (SiCoPo) mehrmals gewaschen, bis der Überstand keine Ausfällung in Aceton zeigte.

| | |
|---|---|
| Butadien | 237 g |
| Styrol | 158.9 g |
| ACCN | 0.64 g |
| BPTT | 0.12 g |
| SiPTPT | 21.5 g |
| Toluol | 350 g |

### Endgruppenfunktionalisierung (Thioether):

SiCoPo wurde in THF (200 ml) gelöst, Hydrazin (2,4 mL) zugegeben und die Lösung bei Raumtemperatur für 36 h kräftig gerührt. Butylacrylat (2 ml, 14,0 mmol) wurde zugegeben, nach 36 h wurde die Lösung zentrifugiert (9000 U/min, 20 °C, 1 h), die Partikel wurden zweimal mit THF gewaschen und im Vakuum bei 40 °C für 12 h getrocknet.

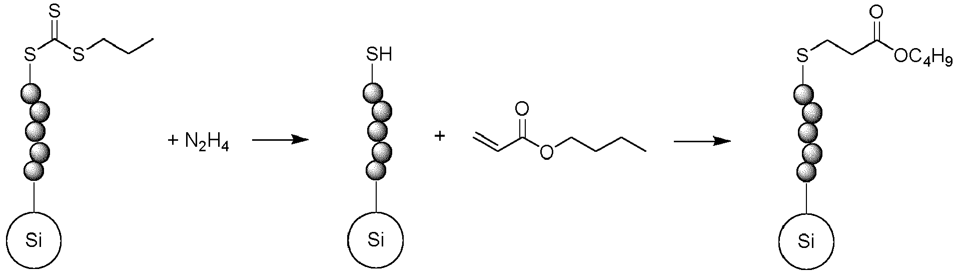

### AN 26:

| | |
|---|---|
| AN 26: modifiziertes Plasma Chem Silica (n):: | Copolymer mit 24,0 % Styrol und 76,0 |
| | % Butadien (1,2 16,5.%; 1,4 83,5%) |
| | Mn: 22000 g/mol |
| | PDI: 1.8. |
| | RAFT-Agenz: CDSPA mit Linker 3-(Ethoxydimethylsilyl)-propylamin |
| | |

### Vorfunktionalisierte SINP

SiNPs (PlasmaChem, 18,0 g) wurden in THF (trocken, 300 mL) unter Ultraschall für 30 Minuten dispergiert. 3-Aminopropyldimethylethoxysilan (APDEMS, 2,0 g, 14,4 mmol) wurde zugegeben, die Lösung wurde 30 min lang mit Argon gespült und 3 d lang bei 90 °C kräftig gerührt. Die Lösung wurde zentrifugiert (9000 U/min, 0 °C, 1 h), die Partikel (SiNH2) wurden zweimal mit THF gewaschen.

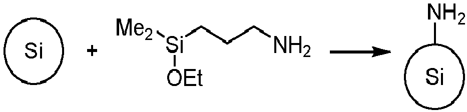

SiNH₂ und aktivierte 4 Cyano-4-[(dodecylsulfanylthiocarbonyl)sulfanyl]pentansäure (act. CDSPA) (1,5 g) wurden in THF (trocken, 200 mL) unter Ultraschall für 30 min gelöst, die Lösung wurde mit Argon für 30 min gespült und bei Raumtemperatur für 3 d kräftig gerührt Die Lösung wurde zentrifugiert (9000 U/min, 0 °C, 1 h) und die Partikel (SiCDSPA) wurden 3 mal mit THF gewaschen.

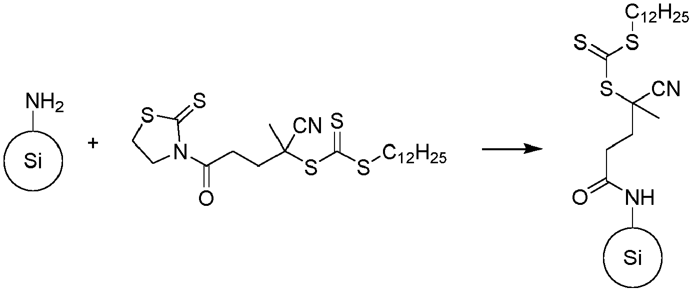

### Polymerisation:

Poly(styrol-co-butadien) wurde durch RAFT-Polymerisation (87°C, 24 h) mit SiCDSPA als RAFT-Mittel synthetisiert. Die Lösung wurde zentrifugiert (9000 U/min, 0 °C, 1 h) und die Partikel (SiCoPo) mehrmals mit diesem gewaschen, bis der Überstand keine Ausfällung in Aceton zeigte.

| | |
|---|---|
| Butadien | 243 g |
| Styrol | 163 g |
| ACCN | 0.65 g |
| BPTT | 0.13 g |
| SiCDSPA | 21.5 g |
| Toluol | 350 g |

### Endgruppenfunktionalisierung (Thioether):

SiCoPo wurde in THF (200 ml) gelöst, Hydrazin (2,4 mL) zugegeben und die Lösung bei Raumtemperatur für 36 h kräftig gerührt. Butylacrylat (2 ml, 14,0 mmol) wurde zugegeben, nach 2 d wurde die Lösung zentrifugiert (9000 U/min, 20 °C, 1 h), die Partikel wurden zweimal mit THF gewaschen und im Vakuum bei 40 °C für 12 h getrocknet.

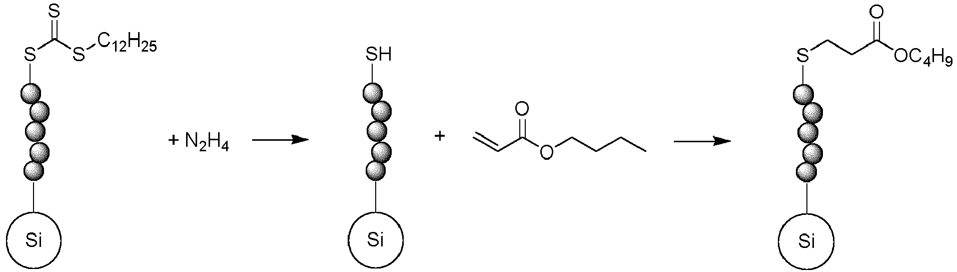

### AN27:

| | |
|---|---|
| AN 27: modifiziertes Plasma Chem Silica (n):: | Copolymer mit 25,3% Styrol und 74,7 |
| | % Butadien (1,2 16,5.%; 1,4 83,5%) |
| | Mn: 24000 g/mol |
| | PDI: 1,9 |
| | RAFT-Agenz: DTPT |

### Vorfunktionalisierte SINP

SiNPs (PlasmaChem, 18,0 g) wurden in DME (250 mL) unter Ultraschall für 30 Minuten dispergiert. Dodecyl((trimethoxysilyl)ethylphenylmethyl)trithiocarbonat (DTPT, 2,0 g) und Maleinsäureanhydrid (0,25 mL) wurden hinzugefügt. Die Lösung wurde bei Raumtemperatur für 3 d kräftig gerührt. Die Lösung wurde zentrifugiert (9000 U/min, 0 °C, 1 h), die Partikel (SiDTPT) wurden dreimal mit Methanol gewaschen.

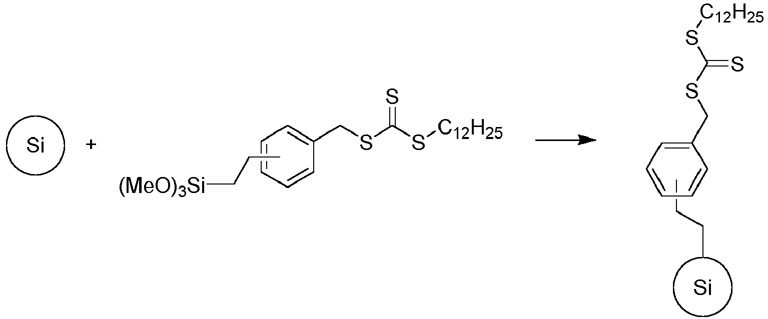

### Polymerisation:

Poly(styrol-co-butadien) wurde durch RAFT-Polymerisation (87°C, 24 h) mit SiDTPT als RAFT-Mittel synthetisiert. Die Lösung wurde zentrifugiert (9000 U/min, 0 °C, 1 h) und die Partikel (SiCoPo) mehrmals mit diesem gewaschen, bis der Überstand keine Ausfällung in Aceton zeigte.

| | |
|---|---|
| Butadien | 244 g |
| Styrol | 162 g |
| ACCN | 0.65 g |
| BPTT | 0.12 g |
| SiDTPT | 21.5 g |
| Toluol | 350 g |

### Endgruppenfunktionalisierung (Thioether):

SiCoPo wurde in THF (200 ml) gelöst, Hydrazin (2,4 mL) zugegeben und die Lösung bei Raumtemperatur für 36 h kräftig gerührt. Butylacrylat (2 ml, 14,0 mmol) wurde zugegeben, nach 36 h wurde die Lösung zentrifugiert (9000 U/min, 20 °C, 1 h), die Partikel wurden zweimal mit THF gewaschen und im Vakuum bei 40 °C für 12 h getrocknet.

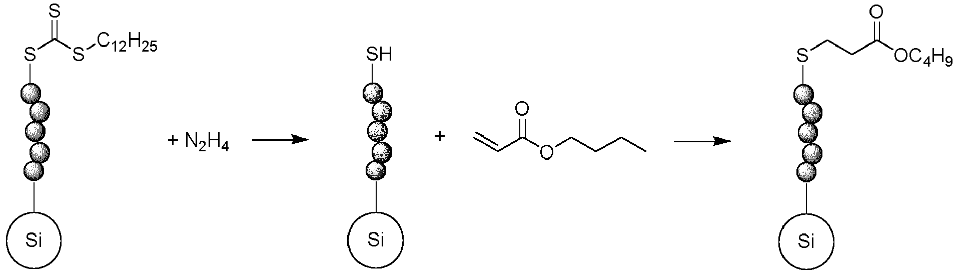

### Polymermassenanteil

### AN15 und AN 18:

Abschätzung aus Elementaranalyse durch Vergleich des Kohlenstoffanteils der vorfunktionalisierten Partikel und der Polymer-funktionalisierten Partikel:
AN 15: 1 wt%
AN 18: 1,5 wt%

### AN24, AN26 und AN27:

Für AN24, AN26 und AN27 wurde der Polymermassenanteil mittels TGA als Differenz aus Massenverlust der Si Partikel mit RAFT vor und nach der Polymerisation bestimmt:
AN24: 13 wt%
AN26: 4 wt%
AN27: 16 wt%

Bei AN24, AN26 und AN27 ist zu beachten, dass die Analyse des oberflächengebundenen Polymers nicht durchgeführt werden konnte. Es sind nur die Ergebnisse des freien Polymers aufgeführt, welches bei der RAFT Polymerisation mit dem "Grafting-From" R Gruppen Ansatz ebenfalls parallel in Lösung entsteht. Um hier auch eine Kontrolle zu erzielen, wird zusätzlich freies RAFT Agenz (BPTT), welches nicht an den Partikeln binden kann, zugegeben. Nach der Theorie der RAFT Polymerisation sollten das Polymer in Lösung und das oberflächen-gebundene Polymer vergleichbar sein. (Dies wird auch durch die Berechnung der theoretischen Molmasse mit Hilfe der TGA Analyse in etwa bestätigt).

Die Herstellung der erfindungsgemäßen Kautschukmischung erfolgt auf herkömmliche Art und Weise, wobei zunächst in der Regel eine Grundmischung, die sämtliche Bestandteile mit Ausnahme des Vulkanisationssystems (Schwefel und vulkanisationsbeeinflussende Stoffe) enthält, in ein oder mehreren Mischstufen hergestellt wird und im Anschluss durch Zugabe des Vulkanisationssystems die Fertigmischung erzeugt wird. Anschließend wird die Mischung weiterverarbeitet.

Die Mischungsherstellung erfolgte unter üblichen Bedingungen in mehreren Stufen in einem Labormischer.

Aus sämtlichen Mischungen wurden Prüfkörper durch Vulkanisation nach t₉₅ - t₁₀₀ (gemessen am Moving Disc Rheometer gemäß ASTM D 5289-12/ ISO 6502) unter Druck bei 160°C - 170°C hergestellt.

Mit diesen Prüfkörpern für die Kautschukindustrie wurden typische Materialeigenschaften bestimmt. Die Ergebnisse sind in Tabelle 2 zusammengefasst. Für die Tests an den Prüfkörpern wurden folgende Testverfahren angewandt. Die zitierten Normen und Standards sind die am Anmeldetag gültigen:

Shore-A-Härte bei Raumtemperatur und 70 °C nach DIN 53 505 und anschließend nach ISO 868 geprüft.

Rückprallelastizität (Rebound) bei Raumtemperatur und 70°C gemäß ISO 4662.

Bruchdehnung bei Raumtemperatur und Spannungswert (Modul) bei 50, 100, 200 und 300 % Dehnung bei Raumtemperatur gemäß DIN 53 504.

Maximaler Verlustfaktor tan δmax bei 55 °C als Maximalwert über den Dehnungssweep aus dynamisch-mechanischer Messung.

| Tabelle 1: | | | | | | | | | |
|---|---|---|---|---|---|---|---|---|---|
| | | Ref 1 | Ref 2 | Ref 3 | Ref 4 | Ref 5 | Ref 6 | EM1 | EM2 |
| Naturkautschuk | a | 10 | 10 | 10 | 10 | 10 | 10 | 10 | 10 |
| Butadienkautschuk | b | 20 | 20 | 20 | 20 | 20 | 20 | 20 | 20 |
| Styrol-Butadienkautschuk | c | 70 | 70 | 70 | 70 | 70 | 70 | 70 | 70 |
| Weichmacher | | 35 | 35 | 35 | 35 | 35 | 35 | 35 | 35 |
| Alterungsschutzmittel | d | 4 | 4 | 4 | 4 | 4 | 4 | 4 | 4 |
| ZnO | e | 5 | 5 | 5 | 5 | 5 | 5 | 5 | 5 |
| Beschleuniger | f | 4 | 4 | 4 | 4 | 4 | 4 | 4 | 4 |
| Schwefel | | 2 | 2 | 2 | 2 | 2 | 2 | 2 | 2 |
| TESPD | | 5,04 | - | - | - | - | - | - | - |
| Referenz Silica | g | 70 | 70 | | | | | | |
| Referenz Silica | AN12 | | | 70 | | | | | |
| Grafting to | AN15 | | | | | | | 70 | |
| Grafting to | AN18 | | | | | | | | 70 |
| Grafting from | AN24 | | | | 70 | | | | |
| Grafting from | AN26 | | | | | 70 | | | |
| Grafting from | AN27 | | | | | | 70 | | |

| Tabelle 2: | | | | | Grafting from | Grafting from | Grafting from | Grafting to | Grafting to |
|---|---|---|---|---|---|---|---|---|---|
| | | Ref 1 | Ref 2 | Ref 3 | Ref 4 | Ref 5 | Ref 6 | EM1 | EM2 |
| Shore A- Härte RT | ShA | 45,7 | 44,6 | 44,7 | 44,8 | 45,5 | 49,8 | 46,8 | 45,9 |
| Shore A- Härte 70°C | ShA | 45,4 | 37,8 | 43,4 | 40,9 | 42 | 45,8 | 41,8 | 40,7 |
| Rückprallelastizität (Rebound) RT | % | 51 | 50,7 | 49,7 | 50,2 | 50,8 | 49 | 51,6 | 49,2 |
| Rückprallelastizität (Rebound, Rb) 70 °C | % | 65,2 | 61,9 | 63,9 | 68,2 | 71,3 | 64,2 | 69,1 | 68 |
| Diff. (Rb 70°C-Rb RT) | % | 14,2 | 11,2 | 14,1 | 18 | 20,5 | 15,2 | 17,6 | 18,8 |
| Bruchdehnung RT (S3) | % | 291 | 392 | 380 | 423 | 418 | 278 | 489 | 475 |
| Dämpfungsfaktor (tan δ max) 55°C | - | 0,079 | 0,099 | 0,096 | 0,097 | 0,08 | 0,105 | 0,089 | 0,089 |

| | | | | | | | | | |
|---|---|---|---|---|---|---|---|---|---|
| ^{a} Naturkautschuk, ^{b} hoch-cis Butadien-Kautschuk, Nd-katalysiert, Anteil an cis-1,4-Einheiten 96 %, ^{c}lösungspolymerisiertes Styrol-Butadien-Copolymer aus dem Stand der Technik mit Hydroxy-Gruppen, Nipol(R) NS 612, Fa. Zeon Corporation, ^{d} 6PPD und Ozonschutzwachs, ^{e} Zinkoxid und Stearinsäure, ^{f} CBS und DPG, ^{g} unmodifiziertes Referenzsilica von Plasma Chem, Partikeldurchmesser 30-40 nm | | | | | | | | | |

Die erfindungsgemäßen Rezepte mit EM1 und EM2 zeigen im Vergleich mit den Referenzmischungen 1-3 erhöhte Rebound 70°C Werte und verringerte Dämpfungsfaktoren ((tan δ max) 55°C). Diese Eigenschaften zeigen dem Fachmann eine Verbesserung des Rollwiderstands in der Reifenanwendung, Die erhöhte Differenz zwischen Rebound 70°C und Rebound RT lässt auf einen verbesserten Zielkonflikt zwischen Nassgriff und Rollwiderstand schließen. Weiterhin lässt die erhöhte Bruchdehnung auf eine verbesserte Haltbarkeit und Reißfestigkeit schließen. Wird weiterhin die Grafting-To mit der Grafting-From Methode verglichen, zeigt sich eine verbesserte Bruchdehnung im Fall von EM1 und EM2 im Vergleich mit den Referenzmischungen 4-6. Ein besserer Dämpfungsfaktor wird für die Grafting-To Methode beobachtet, wenn EM1 und EM2 mit Referenzmischung 4 und 6 verglichen werden. Diese Eigenschaft zeigt dem Fachmann eine Verbesserung des Rollwiderstands in der Reifenanwendung. Diese Eigenschaften zeigen deutlich den Vorteil der erfindungsgemäßen zweistufigen Grafting-To Methode gegenüber dem Stand der Technik.

## Patentansprüche

1. Verfahren zur Herstellung Polymer-funktionalisierter Füllstoffpartikel, wobei die Füllstoffpartikel Silica umfassen oder aus Silica bestehen, umfassend die folgenden Verfahrensschritte:
a) Durchführen einer RAFT-Polymerisation, um ein Polymer gekoppelt an ein RAFT-Agenz zu erhalten,
b) Funktionalisieren der Oberfläche der Füllstoffpartikel mit mindestens einem Linkermolekül, das eine kovalente Bindung mit dem Polymer bzw. dem RAFT-Agenz ausbilden kann, und
c) Ausbilden einer kovalenten Bindung zwischen dem an der Oberfläche der Füllstoffpartikel gebundenem Linkermolekül und dem in Schritt a) erhaltenen Polymer, um das in Schritt a) erhaltene Polymer über das Linkermolekül an die Oberfläche der Füllstoffpartikel zu koppeln.

2. Verfahren gemäß Anspruch 1, **dadurch gekennzeichnet, dass** das RAFT-Agenz 4-Cyano-4-[(dodecylsulfanylthiocarbonyl)sulfanyl]pentasäure und/oder Benzylpropyltrithiocarbonat umfasst.

3. Verfahren gemäß irgendeinem der vorhergehenden Ansprüche, **dadurch gekennzeichnet, dass** das Linkermolekül Dimethylethoxyvinylsilan und/oder 3-Aminopropyldimethylethoxysilan umfasst.

4. Verfahren gemäß Anspruch 2, **dadurch gekennzeichnet, dass** das das Polymer, das an Benzylpropyltrithiocarbonat gekoppelt ist, einer Aminolyse mittels Hydrazin unterzogen wird, bevor es über das Linkermolekül an die Oberfläche der Füllstoffpartikel gekoppelt wird.

5. Verfahren gemäß Anspruch 2, **dadurch gekennzeichnet, dass** in einem Schritt d) die Trithiocarbonatgruppe des RAFT-Agenzes in eine freie SH-Gruppe umgewandelt wird, vorzugsweise mittels Aminolyse mittels Hydrazin, um eine Endgruppenmodifikation des Polymers zu ermöglichen.

6. Verfahren gemäß Anspruch 5, **dadurch gekennzeichnet, dass** die Endgruppenmodifikation die Bildung eines Thioethers, vorzugsweise mit einem Acrylat, besonders bevorzugt mit Butylacrylat, umfasst.

7. Verfahren gemäß irgendeinem der vorhergehenden Ansprüche, **dadurch gekennzeichnet, dass** das Polymer einen Styrol-Butadien-Kautschuk umfasst.

8. Verfahren gemäß irgendeinem der vorhergehenden Ansprüche, **dadurch gekennzeichnet, dass** das Polymer aus einem Styrol-Butadien-Kautschuk mit 10 bis 30 % Styrol und 90 bis 70% Butadien besteht.

9. Verfahren gemäß irgendeinem der vorhergehenden Ansprüche, **dadurch gekennzeichnet, dass** das Polymer ein Molekulargewicht von 5000 bis 40000 g/mol aufweist.

10. Verfahren gemäß irgendeinem der vorhergehenden Ansprüche, **dadurch gekennzeichnet, dass** das Polymer einen Polydispersitätsindex von 1 bis 2 aufweist.

11. Polymer-funktionalisierte Füllstoffpartikel, erhältlich durch das Verfahren gemäß irgendeinem der Ansprüche 1 bis 10.

12. Kautschukmischung, **dadurch gekennzeichnet, dass** diese Polymer-funktionalisierte Füllstoffpartikel gemäß Anspruch 11 enthält.

13. Reifen, **dadurch gekennzeichnet, dass** er eine Kautschukmischung gemäß Anspruch 12 umfasst.
